**Europäisches Patentamt**

**European Patent Office**

**Office européen des brevets**

(19)

(11) Veröffentlichungsnummer: **0 019 161**
**B1**

(12) **EUROPÄISCHE PATENTSCHRIFT**

(45) Veröffentlichungstag der Patentschrift:
13.04.83

(51) Int. Cl.³: **C 08 G 59/32**, D 06 M 15/38,
D 04 H 1/64

(21) Anmeldenummer: 80102381.3

(22) Anmeldetag: 02.05.80

(54) **Imprägnier- und Bindemittel auf der Basis wässriger Dispersionen von Copolymerisaten, die Epoxygruppen aufweisen und ihre Verwendung.**

(30) Priorität: **10.05.79 DE 2918827**

(43) Veröffentlichungstag der Anmeldung:
**26.11.80 Patentblatt 80/24**

(45) Bekanntmachung des Hinweises auf die Patenterteilung:
**13.04.83 Patentblatt 83/15**

(84) Benannte Vertragsstaaten:
**BE DE FR GB NL SE**

(56) Entgegenhaltungen:
**DE-A-2 158 038**
**DE-B-2 541 635**
**US-A-3 498 875**

(73) Patentinhaber: **BASF Aktiengesellschaft,
Carl-Bosch-Strasse 38, D-6700 Ludwigshafen (DE)**

(72) Erfinder: **Czauderna, Bernhard, Dr., Hintergasse 4,
D-6945 Hirschberg (DE)**
Erfinder: **Einwiller, Andreas, Dr., Apoldaer Weg 26,
D-6800 Mannheim 42 (DE)**
Erfinder: **Wendel, Kurt, Dr., Beethovenstrasse 8,
D-6700 Ludwigshafen (DE)**

# Imprägnier- und Bindemittel auf Basis wäßriger Dispersionen von Copolymerisaten, die Epoxydgruppen aufweisen und ihre Verwendung

Die Erfindung betrifft Imprägnier- und Bindemittel auf Basis wäßriger Dispersionen von Copolymerisaten, die Epoxydgruppen aufweisen und die bei ihrer Verarbeitung und Anwendung keinen Formaldehyd abspalten.

Auf vielen Gebieten der Technik werden in großem Umfang Überzugs-, Imprägnier- und Bindemittel auf Basis wäßriger Copolymerisat-Dispersionen eingesetzt, die Filme ergeben, die bei der Filmbildung selbst oder beim Erwärmen vernetzen. Derartige geringfügig vernetzte Filme weisen eine verminderte Löslichkeit insbesondere in organischen Lösungsmitteln auf. Als vernetzend wirkende Monomere werden in vielen Fällen polymerisierbare N-Methylolverbindungen eingesetzt, und bei der Vernetzung solche Monomere einpolymerisiert enthaltender Copolymerisate entsteht Formaldehyd, der zu Belästigungen in den Verarbeitungsbetrieben und beim Gebrauch führen kann.

Derartige Probleme treten beispielsweise bei der Herstellung von Vliesstoffen auf, wenn zu ihrer Verfestigung wäßrige Dispersionen von Copolymerisaten verwendet werden, die polymerisierbare N-Methylolverbindungen, wie N-Methylolacrylamid oder N-Methylolmethylacrylamid einpolymerisiert enthalten.

Es sind daher schon zahlreiche Versuche unternommen worden, um die Formaldehyd abspaltenden Comonomeren durch andere Monomere zu ersetzen, die eine leichte Vernetzbarkeit der Copolymerisate bewirken. Auch Epoxydgruppen enthaltende Copolymerisate wurden schon als Bindemittel für Faservliese (vgl. US-PS 3 498 875) sowie ferner als Imprägnier- und Überzugsmittel (vgl. DE-OS 2 158 038) untersucht. Zur Herstellung von vernetzten Polymeren aus Epoxidverbindungen wurden H-acide Verbindungen (Polycarbonsäuren, Polyalkohole, prim. und sek. Polyamine) und/oder Katalysatoren (tert. Mono- und Polyamine wie z. B. Trisdimethylaminomethylphenol, Metallsalze) verwendet (vgl. C. A. May, Y. Tanaka, Epoxy Resins Chemistry und Technology S. 240—307).

Mit dem für epoxidgruppenhaltige Dispersionen beschriebenen Katalysatoren, z. B. der US-PS 3 498 875 lassen sich jedoch die guten Gebrauchseigenschaften, die mit N-Methylolvernetzten Bindemitteln erreicht werden, nicht einstellen.

Der vorliegenden Erfindung liegt daher die Aufgabe zugrunde, Imprägnier- und Bindemittel zur Verfügung zu stellen, die weder bei ihrer Herstellung noch bei ihrer Verarbeitung und ihrem Gebrauch Formaldehyd abspalten und die z. B. als Bindemittel für Faservliese eingesetzt werden können, ohne daß Einbußen in der Reinigungsbeständigkeit damit verfestigter Vliese in Kauf genommen werden müssen.

Es wurde nun gefunden, daß Imprägnier- und Bindemittel auf Basis wäßriger Dispersionen von Copolymerisaten, die Epoxydgruppen aufweisen, besondere Vorteile beim Einsatz zeigen, wenn sie, bezogen auf die Epoxygruppen aufweisenden Copolymerisate, 1 bis 10 Gew.-% cyclische Verbindungen enthalten, die einen Benzolkern oder einen Hexahydrotriazinring aufweisen und 3 Dimethylaminoalkylgruppen mit 1 bis 4 C-Atomen in den Alkylgruppen tragen. Derartige Imprägnier- und Bindemittel ergeben verhältnismäßig leicht vernetzende Imprägnierungen oder Verfestigungen von Faservliesen, und zeigen überraschenderweise auch nach mehrmonatiger Lagerung keinen Verlust ihrer vorteilhaften Eigenschaften. Dies ist überraschend, da andere, für die Vernetzung von Epoxydgruppen enthaltenden Copolymerisaten übliche Katalysatoren und Stoffe, wie Polycarbonsäuren, Polyalkohole, Polyamine und Metallsalze unter Bedingungen, wie sie beispielsweise beim Verfestigen von Vliesstoffen üblich sind, keine ausreichende Vernetzung ergeben.

Der Gehalt der Imprägnier- und Bindemittel an erfindungsgemäßen Dimethylaminoalkyl-Verbindungen liegt vorzugsweise im Bereich von 2 bis 4 Gew.-%. Die Dimethylaminoalkyl-Verbindungen können auch im Gemisch miteinander verwendet werden, außerdem können sie durch weitere Gruppen, insbesondere durch Hydroxylgruppen am Benzolkern substituiert sein. Beispiele für besonders wirksame Dimethylaminoalkyl-Verbindungen sind tris-Dimethylaminomethylphenol, tris-Dimethylaminomethylbenzol und tris-Dimethylaminopropylhexahydrotriazin. Geeignet sind außerdem Tris-Dimethylaminoalkylcyanursäureester wie Trisdimethylaminoäthylcyanursäureester und -n-butylcyanursäureester.

Die wäßrigen Dispersionen der Epoxydgruppen aufweisenden Copolymerisate sind als solche bekannt und können in an sich üblicher Weise durch Copolymerisation der Monomeren in wäßriger Emulsion unter Verwendung der üblichen Emulgier- und Dispergierhilfsmittel sowie Polymerisations-Initiatoren und ggf. Regler, Puffersubstanzen und sonstige Hilfsmittel hergestellt sein. Ihr Anteil an Epoxydgruppen aufweisenden Comonomeren beträgt im allgemeinen 3 bis 30 Gewichtsprozent und Emulsions-Copolymerisate, die 5 bis 10% ihres Gewichts an Epoxydgruppen enthaltenden Comonomeren einpolymerisiert enthalten, werden vorgezogen. Als Hauptmonomere enthalten die Copolymerisate im allgemeinen 70 bis 97, vorzugsweise 90 bis 95% ihres Gewichts an anderen, üblichen mono- und/oder diolefinisch ungesättigten Monomeren einpolymerisiert, wobei auch ein Anteil von bis zu 10 Gew.-%, bezogen auf die gesamten Monomeren, meist 0,1 bis 5 Gew.-%, an Monomeren mit hydrophilen Gruppen, wie besonders $\alpha,\beta$-monoolefinisch ungesättigte, 3 bis 5 C-Atome enthaltende Mono- und Dicarbonsäuren sowie deren Amide, z. B. Acrylsäure, Methacrylsäure, Itaconsäure, Fumarsäure, Acrylamid, Methacrylamid und Maleinsäureamid in Frage kommen. Als Epoxydgruppen tragende Monomere kommen vor allem Glycidylester von monoolefinisch ungesättigten, meist 3 bis 5 C-Atome enthaltenden Mono- oder Dicarbonsäuren, insbesondere Monocarbonsäuren in Frage, wie besonders Glycidylacrylat und Glycidylmethacrylat. Geeignete Epoxydgruppen aufweisende Comonomere sind ferner z. B. (Meth)Allylglycidyläther, 1,3-Epoxybutylacrylat, Glycidylcrotonat, 2,3-Epoxycyclopentylacrylat und 3,4-Epoxy-1-vinylcyclohexen.

Als Hauptmonomere seien vor allem monoolefinisch ungesättigte Carbonsäureester mit 4 bis 14 C-Atomen genannt, wie besonders Ester der Acryl- und Methacrylsäure mit 1 bis 8 C-Atome enthaltenden Alkanolen und Vinylester von 2 bis 12 C-Atomen enthaltenden Carbonsäuren. Beispiele hierfür sind Methylacrylat, Methylmethacrylat, Äthylacrylat, Äthylmethacrylat, n-Propylacrylat, iso-Propyl-methacrylat, n-Butylacrylat und -Methacrylat, Isobutyl-acrylat und -methacrylat sowie 2-Äthylhexyl-acrylat und -methacrylat, ferner Vinylacetat, Vinylpropionat und Vinyllaurat. Als Comonomere, die in Mengen bis zu 40 Gew.-%, bezogen auf die gesamten Monomeren in Frage kommen, seien ferner noch Acrylnitril, Styrol und Vinylchlorid genannt. Als Hauptmonomere in Mengen von zusammen bis zu 90% kommen auch Gemische aus Butadien und Styrol in Betracht. Von besonderem Interesse sind meist 40 bis 60%ige Dispersionen von Emulsions-Copolymerisaten aus 50 bis 97 Estern der Acrylsäure mit 1 bis 4 C-Atomen enthaltenden Alkanolen, 0 bis 30 Gew.-% Styrol und/oder Acrylnitril und/oder Methylmethacrylat, 0 bis 5 Gew.-% 3 bis 5 C-Atome enthaltenden monoolefinisch ungesättigten Mono- und/oder Dicarbonsäuren und/oder deren Amide und 3 bis 30 Gew.-% Glycidylester der Acryl- und/oder Methacrylsäure.

Die Herstellung der wäßrigen Dispersionen kann nach an sich bekannten Verfahren der Emulsionspolymerisation unter Verwendung der üblichen Emulgatoren erfolgen, die in einer Menge von 0,1 bis 10 Gew.-%, bezogen auf die Monomeren, als anionische oder nichtionische Emulgier- oder Dispergiermittel oder als Gemische hiervon eingesetzt sein können. Beispiele anionischer Emulgatoren sind Fettsäuren, Harzsäuren, Fettalkoholsulfate, Alkylsulfonate, Hydroxyalkylsulfonate, Salze der Sulfobernsteinsäureester und sulfatierte Äthylenoxidaddukte. Als nichtionogene Emulgatoren können z. B. die bekannten Umsetzungsprodukte des Äthylenoxids mit Fettalkoholen, wie Lauryl-, Myristil-, Cetyl-, Stearyl- und Oleylalkohol, mit Fettsäuren wie Laurin-, Myristin-, Palmitin-, Stearin- und Ölsäure sowie deren Amiden und Alkylphenolen, wie Isooctyl-, Isononyl- und Dodecylphenol Anwendung finden, sowie ferner des Äthylenoxids mit veräthertem oder verestertem Sorbitmonostearat. Die als Beispiele angeführten Verbindungen sind meist mit 4 bis 60 oder mehr Mol Äthylenoxid/Mol umgesetzt. Auch Block-Copolymere aus Äthylenoxid und Propylenoxid mit mindestens einem Mol Äthylenoxid können verwendet sein.

Als Initiatoren eignen sich z. B. anorganische Peroxo-Verbindungen wie Wasserstoffperoxid, Natrium-, Kalium- oder Ammoniumperoxidisulfat, Peroxocarbonate und Boratperoxyhydrate, ferner organische Peroxoverbindungen wie Acylhydroperoxide, Diacylperoxide, Alkylhydroperoxide, Dialkylperoxide und Ester wie tert.-Butylperbenzoat. Die Initiatormenge beträgt im allgemeinen 0,01 bis 5 Gew.-%, bezogen auf die Gesamtmenge der Monomeren.

Die als Beispiele angeführten anorganischen oder organischen Peroxoverbindungen können auch zusammen mit geeigneten Reduktionsmitteln, z. B. Schwefeldioxid, Alkalidisulfiten, Alkali- oder Ammoniumhydrogensulfiten, Thiosulfat, Dithionit und Formaldehydsulfoxylat ferner Hydroxylaminhydrochlorid, Hydrazinsulfat, Eisen-(II)-sulfat, Zinn-(II)-chlorid, Titan-(III)-sulfat, Hydrochinon, Glucose und Ascorbinsäure eingesetzt sein, wobei in kleinen Mengen Metallsalzen, wie wasserlöslichem Mangan-, Eisen-, Kobalt- und/oder Nickel-Salzen gearbeitet werden kann.

Kettenübertragungsmittel wie z. B. Tetrachlormethan, Trichlorbrommethan, Tetrachloräthan, Methallylchlorid, niedere und höhere Alkohole, höhere Alkylmercaptane und Dialkylxanthogenate lassen sich bei der Polymerisation ebenfalls mitverwenden. Die Polymerisation wird im allgemeinen bei 10 bis 95°C durchgeführt, der pH-Wert kann dabei zwischen 1 und 9 liegen.

Die Abmischung mit den Dimethylaminoalkyl-Verbindungen erfolgt nach Beendigung der Polymerisation durch Einrühren in die auf Raumtemperatur abgekühlte Dispersion des Epoxygruppen tragenden Copolymerisats.

Die neuen Mittel können mit besonderem Vorteil als Bindemittel für das Verfestigen von Faservliesen verwendet werden, wobei die unverfestigten Vliese nach dem Naßlegeverfahren oder auf trockenem Wege hergestellt sein können, auch Spinnvliese können mit den Bindemitteln verfestigt werden. Die Vliese können aus den üblichen Fasern, z. B. auf Basis von Polyamiden, Polyestern oder Polyacrylnitril sowie aus Cellulose, Wolle oder Seide aufgebaut sein. Auch das Verfestigen von Glasfaservliesen kommt in Betracht. Das Aufbringen der erfindungsgemäßen Bindemittel kann in üblicher Weise erfolgen. Nach dem Entfernen überschüssigen Bindemittels, z. B. durch Abquetschen, kann in üblicher Weise getrocknet werden. Durch kurzzeitiges Tempern bei Temperaturen von meist 100 bis 200, insbesondere von 110 bis 180°C, können die erfindungsgemäßen Überzugs-, Imprägnier- und Bindemittel nach dem Abtrennen des Wassers vernetzt werden und erreichen so ihre optimalen Eigenschaften. Bei ihrer Verwendung als Bindemittel zum Verfestigen von Faservliesen werden im allgemeinen 15 bis 100 Gew.-%, bezogen auf das Fasergewicht, vorzugsweise 20 bis 50 Gew.-% (fest auf fest) an Bindemittel eingesetzt.

Die in den folgenden Beispielen angegebenen Teile und Prozente beziehen sich auf das Gewicht.

### Beispiel 1

#### a) Herstellung der Polymerisat-Dispersion

Zu einer Lösung von 0,3 Teilen Kaliumperoxiddisulfat in 449 Teilen Wasser gibt man innerhalb von 2 Stunden bei 85°C eine Emulsion von 288 Teilen Vinylacetat, 288 Teilen Äthylacrylat und 43 Teilen Glycidylacrylat in einer Lösung von 15 Teilen äthoxyliertem Isooctylphenol (25 Mol Äthylenoxid) und 3 Teilen Natriumdodecylsulfat in 357 Teilen Wasser sowie gleichzeitig 90% einer Lösung von 3,2 Teilen Kaliumperoxiddisulfat in 72 Teilen Wasser. Anschließend gibt man noch bei der gleichen Temperatur innerhalb einer weiteren Stunde die restliche Initiatorlösung und rührt 2 weitere Stunden bei 85°C nach. Zu der erhaltenen Copolymerisat-Dispersion, die ein Epoxygruppen enthaltendes Vinylacetat-Äthylacrylat-Copolymerisat enthält, gibt man nach dem Abkühlen 16 Teile tris-Dimethylaminomethylbenzol. Das erhaltene Bindemittel ist zum Verfestigen von Faservliesen geeignet.

#### b) Verwendung der Dispersion zum Verfestigen eines Faservlieses

Ein Krempelvlies mit einem Flächengewicht von 40 g/m² aus 60 Teilen Polyamidfasern (weiß mattiert), 3,3 dtex 50 mm Schnittlänge) und 40 Teilen Polyesterfasern (mattiert, 3,3 dtex, 40 mm Schnittlänge) wird mit dem auf einen Feststoffgehalt von 15% verdünnten, nach den Angaben in Beispiel 1a) hergestellten Bindemittel imprägniert und der Überschuß an Bindemittel in üblicher Weise abgequetscht. Man trocknet dann 6 Minuten bei 150°C, wobei gleichzeitig Vernetzung eintritt. In dem erhaltenen, gebundenen Faservlies beträgt das Verhältnis Faser : Bindemittel (fest zu fest) 3 : 1. Man erhält ein gefestigtes Faservlies, das ausgezeichnete Trokkenreinigungsbeständigkeit, z. B. gegen Perchloräthylen-Wäsche, aufweist.

### Beispiel 2

#### a) Herstellung eines Imprägnier- und Bindemittels

Zu einer Lösung von 0,7 Teilen Kaliumperoxiddisulfat in 922 Teilen Wasser gibt man bei 85°C eine Emulsion von 780 Teilen n-Butylacrylat, 334 Teilen Acrylnitril und 85 Teilen Glycidylmethacrylat in eine Lösung von 12 Teilen Natriumdodecylsulfat und 30 Teilen äthoxyliertes Para-isooctylphenol (25 Mol Äthylenoxid) und 6 Teile Natriumpyrophosphat in 726 Teilen Wasser innerhalb von 2 Stunden sowie 90% einer Lösung von 6,5 Teilen Kaliumperoxiddisulfat in 162 Teilen Wasser. Man fügt dann bei der gleichen Temperatur innerhalb von 1 Stunde die restliche Initiatorlösung zu und rührt noch weitere 2 Stunden bei 85°C nach. Nach dem Abkühlen gibt man 16 Teile tris-Dimethylaminopropylhexahydrotriazin zu und erhält ein Imprägnier- und Bindemittel, das insbesondere zum Verfestigen von Faservliesen geeignet ist.

#### b) Verwendung als Bindemittel für Faservliese

Ein Krempel-Vlies aus 100% Polyamidfasern (1,7 dtex, 40 mm Schnittlänge) eines Flächengewichts von 50 g/m² wird mit dem auf 12% Feststoffgehalt verdünnten Bindemittel in üblicher Weise schaumimprägniert und dann 7 Minuten bei 140°C getrocknet, wobei Vernetzung des Bindemittels erfolgt. Das Verhältnis von Fasern zu Bindemittel-Polymerisat beträgt 2 : 1. Das verfestigte Faservlies ist sehr trockenreinigungsbeständig, insbesondere bei Perchloräthylenwäschen.

### Beispiel 3

#### a) Herstellung eines Bindemittels

Zu einer Lösung von 8 Teilen 30%iger wäßriger Wasserstoffsuperoxidlösung, 0,24 Teilen Ascorbinsäure und 0,001 Teilen Eisen-(II)-sulfat in 930 Teilen Wasser gibt man bei 50 bis 55°C eine Emulsion von 557 Teilen n-Butylacrylat, 557 Teilen Äthylacrylat und 85 Teilen Glycidylmethacrylat in eine Lösung von 12 Teilen Natriumdodecylsulfat und 30 Teilen äthoxyliertem Isooctylphenol (25 Mol Äthylenoxid) in 753 Teilen Wasser innerhalb von 2 Stunden und dazu 90% einer Lösung von 2,2 Teilen Ascorbinsäure und 0,011 Teilen Eisen-(II)-sulfat in 108 Teilen Wasser. Anschließend fügt man innerhalb einer Stunde die restliche Ascorbinsäurelösung zu und läßt dann abkühlen. Zu der erhaltenen wäßrigen Copolymerisat-Dispersion gibt man 32 Teile tris-Dimethylaminoäthylcyanurat. Das erhaltene Bindemittel ist besonders zum Verfestigen von Faservliesen geeignet.

#### b) Verwendung des Bindemittels zum Verfestigen von Faservliesen

Die Verwendungsbeispiele 1b) und 2b) werden wiederholt, mit der Maßgabe, daß anstelle der Bindemittel 1a) und 2a) das Bindemittel 3a) unter sonst gleichen Bedingungen eingesetzt wird. Man erhält jeweils verfestigte Vliesstoffe, die sehr gut trockenreinigungsbeständig, insbesondere gegen Perchloräthylen, sind.

### Patentansprüche

1. Imprägnier- und Bindemittel auf Basis wäßriger Dispersionen von Copolymerisaten, die Epoxygruppen aufweisen, dadurch gekennzeichnet, daß sie, bezogen auf die Epoxygruppen aufweisenden Copolymerisate, 1 bis 10 Gew.-% cyclische Verbindungen enthalten, die einen Benzolkern oder einen Hexahydrotriazinring aufweisen und 3 Dimethylaminoalkylgruppen mit 1 bis 4 C-Atomen in den Alkylgruppen tragen.

2. Imprägnier- und Bindemittel nach Anspruch 1, dadurch gekennzeichnet, daß die cyclischen Verbindungen einen durch eine Hydroxylgruppe substituierten Benzolkern aufweisen.

3. Verwendung der Imprägnier- und Bindemittel nach Anspruch 1 zum Verfestigen von Faservliesen.

## Claims

1. An impregnating agent and binder based on an aqueous dispersion of an epoxy-containing copolymer which contains from 1 to 10% by weight, based on the epoxy-containing copolymer, of a cyclic compound which contains a benzene nucleus or a hexahydrotriazine ring and carries 3 dimethylaminoalkyl groups, where alkyl is of 1 to 4 carbon atoms.

2. An impregnating agent and binder as claimed in claim 1, wherein the cyclic compound contains a hydroxyl-substituted benzene ring.

3. The use of an impregnating agent and binder as claimed in claim 1 for bonding nonwovens.

## Revendications

1. Produits d'imprégnation et liants à base de dispersions aqueuses de copolymères contenant des groupes époxy, caractérisés en ce qu'ils contiennent, par rapport aux copolymères portant des groupes époxy, de 1 à 10% en poids de composés cycliques contenant un noyau benzénique ou un noyau d'hexahydrotriazine et 3 groupes diméthylaminoalkyle contenant eux-mêmes de 1 à 4 atomes de carbone dans les groupes alkyle.

2. Produits d'imprégnation et liants selon la revendication 1, caractérisés en ce que les composés cycliques contiennent un noyau benzénique substitué par un groupe hydroxy.

3. Utilisation des produits d'imprégnation et liants selon la revendication 1 pour le renforcement de nappes de fibres.